# EUROPÄISCHE PATENTSCHRIFT

(11) **EP 3 365 532 B1**
(45) Veröffentlichungstag und Bekanntmachung des Hinweises auf die Patenterteilung: **11.12.2019**
(21) Anmeldenummer: 16784896.9
(22) Anmeldetag: 20.10.2016
(51) Int. Cl.: F01D 11/04, F01D 25/32

(54) **TROCKENGASDICHTUNGSSYSTEM UND STRÖMUNGSMASCHINE MIT EINEM TROCKENGASDICHTUNGSSYSTEM**
DRY GAS SEALING SYSTEM, AND TURBOMACHINE COMPRISING A DRY GAS SEALING SYSTEM
SYSTÈME D'ÉTANCHÉITÉ À GAZ SEC ET TURBOMACHINE DOTÉE D'UN SYSTÈME D'ÉTANCHÉITÉ À GAZ SEC

(30) Priorität: 22.10.2015 DE 102015013659
(43) Veröffentlichungstag der Anmeldung: 29.08.2018
(73) Patentinhaber: MAN Energy Solutions SE, 86153 Augsburg (DE)
(72) Erfinder: SUTER, Roger, 8052 Zürich (CH); BETSCHART, Michael, 6354 Vitznsau (CH)
(86) Internationale Anmeldenummer: PCT/EP2016/075284
(87) Internationale Veröffentlichungsnummer: WO 2017/068073

(56) Entgegenhaltungen:
- EP-A1- 2 631 489
- WO-A1-2009/158252
- US-A- 4 084 825

## Beschreibung

Die Erfindung betrifft ein Trockengasdichtungssystem für eine Strömungsmaschine gemäß dem Oberbergriff des Anspruchs 1 und eine Strömungsmaschine mit einem solchen Trockengasdichtungssystem.

In Strömungsmaschinen, wie zum Beispiel in Turbokompressoren, kommen zur Abdichtung eines rotorseitigen Bauteils der Strömungsmaschine gegenüber einem statorseitigen Bauteil der Strömungsmaschine zunehmend Trockengasdichtungssysteme zum Einsatz, die konventionelle Ölfilmdichtungen ablösen. Aus dem Stand der Technik bekannte Trockengasdichtungssysteme beziehungsweise Reinigungseinrichtungen sind bekannt aus US4084825, EP2631489A1, WO2009/158252A1 und EP1331981B1.

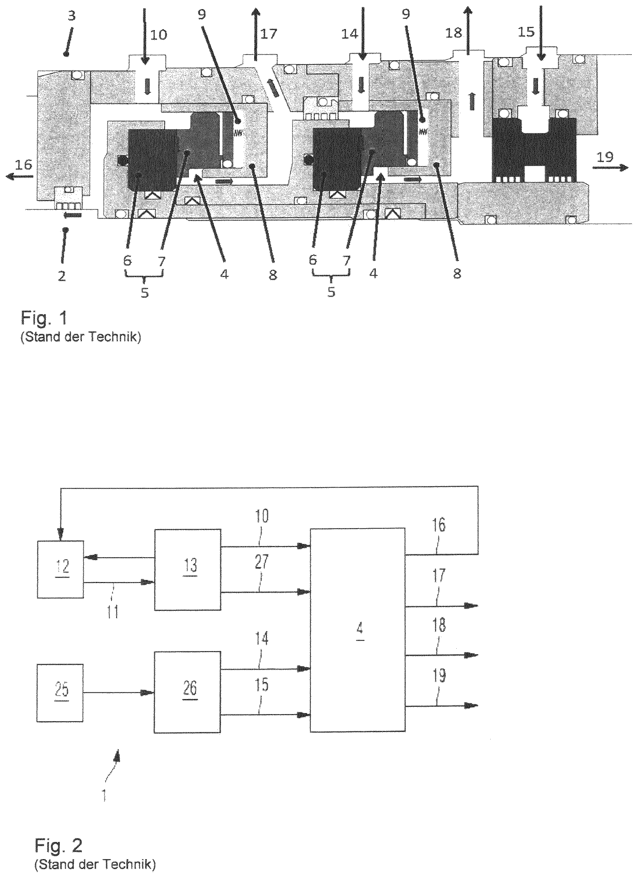

Fig. 1 und 2 zeigen Details eines aus dem Stand der Technik bekannten Trockengasdichtungssystems 1, welches der Abdichtung eines rotorseitigen Bauteils 2 einer Strömungsmaschine gegenüber einem statorseitigen Bauteil 3 derselben dient. In Fig. 1 sind zwei Trockengasdichtungen 4 gezeigt, die der Abdichtung des rotorseitigen Bauteils 2 gegenüber dem statorseitigen Bauteil 3 dienen, wobei jede der Trockengasdichtungen 4 eine Dichteinrichtung 5 aus einem rotorseitigen Dichtelement 6 und einem statorseitigen Dichtelement 7 umfasst. Das jeweilige statorseitige Dichtelement 7 der Dichteinrichtung 5 der jeweiligen Trockengasdichtung 4 ist an einer statorseitigen Trageinrichtung 8 der jeweiligen Trockengasdichtung 4 befestigt und wird über ein Federelement 9, welches sich einerseits an der jeweiligen statorseitigen Trageinrichtung 8 und andererseits am statorseitigen Bauteil abstützt, mit einer definierten Kraft gegen das rotorseitige Dichtelement 6 gepresst bzw. gedrückt. Hierdurch kommt das statorseitigen Dichtelement 7 am rotorseitigen Dichtelement 6 definiert zur Anlage.

So wird jeder der Trockengasdichtungen 4 des Trockengasdichtungssystems 1 einerseits sogenanntes Dichtungsgas 10, auch Seal Gas genannt, zugeführt, wobei es sich beim Dichtungsgas 10 bzw. Seal Gas um gereinigtes Prozessgas 11 handelt, weiches der Strömungsmaschine 12 entnommen und zur Reinigung über eine Reinigungseinrichtung 13 geführt wird. Weiterhin werden jeder Trockengasdichtung 4 zwei weitere Gasströme zugeführt, nämlich einerseits Sperrgas 14, auch Buffer Gas genannt, sowie Trenngas 15, auch Separation Gas genannt. Beim Sperrgas 14 und Trenngas 15 handelt es sich beispielsweise um N2, welches in einem Speicher 25 bereitgehalten und nach Aufbereitung über eine entsprechenden Regeleinrichtung 26 der jeweiligen Trockengasdichtung 4 zugeführt wird.

Bei den Gasrückführungen einer Trockengasdichtung handelt es sich um eine Leckage 16 des Dichtungsgases 10, die der Strömungsmaschine 12 und damit dem Prozess zurückgeführt wird, um eine Leckage 17 aus einer Mischung aus Dichtungsgas 10 und Sperrgas 14, die auch Inner Leckage genannt wird, um eine Leckage 18 einer Mischung aus Sperrgas 14 und Trenngas 15, die auch Outer Leckage genannt wird, sowie um eine Leckage 19 des Trenngases 15 zum Lager, die auch Bearing Leckage genannt wird.

Wie bereits oben ausgeführt, ist es demnach bei Trockengasdichtungssystemen 1 erforderlich, dem Prozess, also der Strömungsmaschine, Prozessgas 11 zu entnehmen, in einer Reinigungseinrichtung 13 zu reinigen und das gereinigte Prozessgas 11 der jeweiligen Trockengasdichtung 4 als Dichtungsgas 10 bzw. Seal Gas zuzuführen. Die Aufbereitung bzw. Reinigung des Prozessgases 11 erfolgt dabei bei aus dem Stand der Technik bekannten Trockengasdichtungssystemen 1 in externen Filtersystemen.

Es besteht Bedarf daran, den Aufbau eines Trockengasdichtungssystems zu vereinfachen. Der Erfindung liegt daher die Aufgabe zugrunde, ein Trockengasdichtungssystem mit einfacherem Aufbau zu schaffen.

Diese Aufgabe wird durch ein Trockengasdichtungssystem nach Anspruch 1 gelöst, Erfindungsgemäß ist die Reinigungseinrichtung als in den Rotor der Strömungsmaschine integrierte Zentrifugaleinrichtung ausgeführt.

Mit der hier vorliegenden Erfindung kann auf eine externe Reinigungseinrichtung in Form einer Filtereinrichtung zur Aufbereitung des der Strömungsmaschine entnommenen Prozessgases, welches als Dichtungsgas verwendet wird, verzichtet werden. Vielmehr wird erfindungsgemäß vorgeschlagen, in den Rotor der Strömungsmaschine eine als Zentrifugaleinrichtung ausgebildete Reinigungseinrichtung zu integrieren, welche die Reinigung des Prozessgases zur Bereitstellung des gereinigten Dichtungsgases übernimmt. Da eine externe Reinigungseinrichtung überflüssig wird, kann der Aufbau des Trockengasdichtungssystems vereinfacht werden. Die Kosten, Komplexität und Störanfälligkeit des Trockengasdichtungssystems werden reduziert.

Erfindungsgemäß ist die Zentrifugaleinrichtung in eine Welle des Rotors der Strömungsmaschine integriert, wobei die Welle mindestens eine radiale Eintrittsbohrung für das Prozessgas, je Trockengasdichtung mindestens eine radiale Austrittsbohrung für Dichtungsgas und mindestens eine radiale Austrittsbohrung für Verunreinigungen aufweist. Durch Integration der Zentrifugaleinrichtung in die Welle des Rotors ist eine besonders vorteilhafte Aufbereitung des Prozessgases zur Bereitstellung gereinigten Dichtungsgases möglich. Ein weiterer Vorteil besteht darin, dass durch den hohlgebohrten Rotor bzw. die hohlgebohrte Welle eine bessere Rotordynamik erreicht werden kann. Ferner können bestehende Strömungsmaschinen einfach nachgerüstet bzw, umgerüstet werden.

Nach einer vorteilhaften Weiterbildung weist das Trockengasdichtungssystem einen externen Speicher für Dichtungsgas auf. Mit dem externen Speicherverdichtungsgas wird gewährleistet, dass bei stillstehendem Rotor der Strömungsmaschine die Dichtfunktion der oder jeder Trockengasdichtung aufrechterhalten werden kann,

Nach einer vorteilhaften Weiterbildung weist das Trockengasdichtungssystem mindestens eine Heizbohrung im Stator und/oder Gehäusedeckel auf. Hiermit kann dann ein sogenanntes Einfrieren bzw. Verkleben der Trockengasdichtung verhindert werden.

Nach einer weiteren vorteilhaften Weiterbildung weist die Reinigungseinrichtung im Rotor eine entsprechende Wascheinrichtung (nicht dargestellt) mit einer externen Flüssigkeit auf, wobei diese Flüssigkeit beispielsweise über die Eintrittsbohrung, optional auch mit zusätzlicher Düse, zugeführt wird. Das verschmutzte Waschwasser wird über eine oder mehrere Austrittsbohrungen abgeführt.

Die erfindungsgemäße Strömungsmaschine ist in Anspruch 5 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen schematisieren Axialschnitt durch eine Strömungsmaschine im Bereich eines Trockengasdichtungssystems ohne Anlagentechnik nach dem Stand der Technik;
- Fig. 2:: einen Blockschaltbild eines Trockengasdichtungssystems mit Anlagentechnik nach dem Stand der Technik; und
- Fig. 3:: einen schematisieren Axialschnitt durch eine Strömungsmaschine mit einem erfindungsgemäßen Trockengasdichtungssystem.

Die Erfindung betrifft ein Trockengasdichtungssystem 1 einer Strömungsmaschine, insbesondere eines Turbokompressors, und eine Strömungsmaschine mit einem Trockengasdichtungssystem 1.

Ein Trockengasdichtungssystem 1 verfügt über mindestens eine Trockengasdichtung 4, die der Abdichtung eines rotorseitigen Bauteils 2, nachfolgend kurz Rotor 2 genannt, der Strömungsmaschine gegenüber einem statorseitigen Bauteil 3, nachfolgend kurz Stator 3 bzw. Gehäuse genannt, der Strömungsmaschine dient

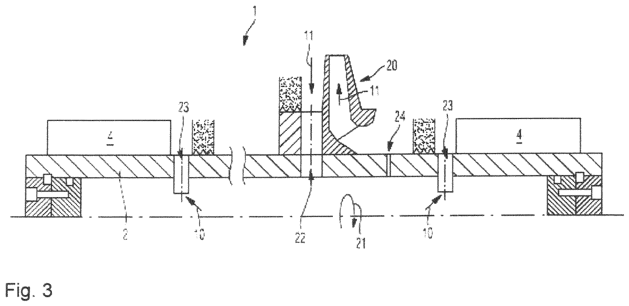

Fig. 3 zeigt einen Querschnitt durch eine Strömungsmaschine im Bereich eines erfindungsgemäßen Trockengasdichtungssystems 1, wobei vom Trockengasdichtungssystem 1 Trockengasdichtungen 4 gezeigt sind, die den Rotor 2 der Strömungsmaschine gegenüber dem in Fig. 3 nicht gezeigten Stator 3 bzw. Gehäuse abdichten. In Fig. 3 ist ein vom Rotor 2 aufgenommenes Laufrad 20 gezeigt, welches der Strömungsführung vom Prozessgas dient.

Wie bereits ausgeführt, wird bei Trockengasdichtungssystemen Prozessgas 11 entnommen, gereinigt und als gereinigtes Dichtungsgas 10 den Trockengasdichtungen 4 zugeführt.

Im Sinne der hier vorliegenden Erfindung ist eine Reinigungseinrichtung, die der Reinigung des Prozessgases 11 zur Bereitstellung des Dichtungsgases 10 dient, in den Rotor 2 der Strömungsmaschine integriert und als Zentrifugaleinrichtung ausgeführt, welche die Rotationsenergie des sich in Richtung des Pfeils 21 drehenden Rotors 2 nutzt, um Verunreinigungen und/oder Flüssigkeiten vom Prozessgas 11 zu trennen und so aus dem Prozessgas 11 gereinigtes Dichtungsgas 10 zu gewinnen.

Dabei ist die Zentrifugaleinrichtung in die Welle des Rotors 2 der Strömungsmaschine integriert, wobei diese Welle 2 mindestens eine Eintrittsöffnung 22 für das Prozessgas 11, für jede die Trockengasdichtung 4 mindestens eine Austrittsöffnung 23 für gereinigtes Dichtungsgas 10 sowie mindestens eine Austrittsöffnung 24 für vom Prozessgas 11 abgetrennte Verunreinigungen aufweist,

Erfindungsgemäß werden demnach Zentrifugalkräfte genutzt, um Verunreinigungen aus dem Prozessgas 11 zu entfernen und so gereinigtes Dichtungsgas 10 für die Trockengasdichtungen 4 bereitzustellen,

Auf Grund der Zentrifugalkräfte und den Strömungsverhältnissen im Kompressor werden bereits erste Verunreinigungen stromaufwärts der Eintrittsbohrung 22 vom Prozessgas 11 entfernt, sodass dieselben erst gar nicht in den Innenraum der Welle bzw. des Rotors eindringen können. Weitere Verunreinigungen werden innerhalb des Rotors bzw. der Welle 2 vom Prozessgas getrennt und über die oder jede Austrittsöffnung 24 abgeführt. Gereinigtes Prozessgas und damit Dichtungsgas 10 kann dann über die Austrittsbohrungen 23 den Trockengasdichtungen 4 zugeführt werden,

Nach einer vorteilhaften Weiterbildung ist ein externer Speicher (nicht gezeigt) für gereinigtes Dichtungsgas 10 vorhanden, der im Normalbetrieb bei drehendem Rotor 2 mit gereinigtem Dichtungsgas 10 gefüllt werden kann, um dasselbe dann, wenn der Rotor 2 stillsteht, dem Speicher zu entnehmen und der jeweiligen Trockengasdichtung 4 zuzuführen. Dies erfolgt insbesondere in einer Abkühlphase während des Stillstands der Strömungsmaschine.

Nach einer weiteren vorteilhaften Weiterbildung ist vorgesehen, dass im Stator 3 und/oder Gehäusedeckel mindestens eine Heizbohrung (nicht gezeigt) eingebracht ist, um bei stillstehendem Rotor 2 das Trockengasdichtungssystem 1, insbesondere die Trockengasdichtungen 4, zu temperieren und so ein Verkleben derselben zu verhindern.

Mit der hier vorliegenden Erfindung wird demnach ein Trockengasdichtungssystem 1 bzw. eine Strömungsmaschine mit einem Trockengasdichtungssystem 1 vorgeschlagen, bei welchem bzw. bei welcher die Aufbereitung des entnommenen Prozessgases 11, nämlich die Reinigung desselben, innerhalb des Rotors 2 bzw. der Rotorwelle erfolgt, nämlich durch eine in die Rotorwelle integrierte Zentrifugaleinrichtung, die Zentrifugalkräfte zur Reinigung des Prozessgases 11 nutzt.

Diese Zentrifugalkräfte sind im Betrieb der Strömungsmaschine bei drehendem Rotor 2 ohnehin vorhanden, sodass auf externe Reinigungseinrichtungen 13, wie zum Beispiel Filter, kann verzichtet werden. Insgesamt werden die Komplexität, die Störanfälligkeit sowie die Kosten eines Trockengasdichtungssystems 1 und damit einer Strömungsmaschine, die ein solches Trockengasdichtungssystem 1 aufweist, reduziert. Bestehende Strömungsmaschinen können im Sinne der Erfindung nachgerüstet bzw. umgerüstet werden.

Nach einer weiteren vorteilhaften Weiterbildung weist die Reinigungseinrichtung 13 im Rotor 2 eine entsprechende Wascheinrichtung (nicht dargestellt) mit einer externen Flüssigkeit auf, wobei diese Flüssigkeit beispielsweise über die Eintrittsbohrung 22, optional auch mit zusätzlicher Düse, zugeführt wird Das verschmutzte Waschwasser wird über eine oder mehrere Austrittsbohrungen 23, 24 abgeführt.

### Bezugszeichenliste

- 1: Trockengasdichtungssystem
- 2: Rotor
- 3: Stator
- 4: Trockengasdichtung
- 5: Dichtungseinrichtung
- 6: rotorseitiges Dichtungselement
- 7: statorseitiges Dichtungselement
- 8: Trageinrichtung
- 9: Feder
- 10: Dichtungsgas / Seal Gas
- 11: Prozessgas
- 12: Strömungsmaschine
- 13: Reinigungseinrichtung
- 14: Sperrgas / Buffer Gas
- 15: Trenngas / Separation Gas
- 16: Leckage (Dichtgas)
- 17: Leckage / innen Leckage
- 18: Leckage / Outer Leckage
- 19: Leckage / Bearing Leckage
- 20: Laufrad
- 21: Drehrichtung
- 22: Eintrittsöffnung
- 23: Austrittsöffnung
- 24: Austrittsöffnung
- 25: Speicher
- 26: Regeleinrichtung
- 27: Booster System

## Patentansprüche

1. Trockengasdichtungssystem (1) für eine Strömungsmaschine, insbesondere für einen Turbokompressor, mit mindestens einer Trockengasdichtung (4) zur Abdichtung eines rotorseitigen Bauteils (2) der Strömungsmaschine gegenüber einem statorseitigen Bauteil (3) der Strömungsmaschine, mit einer Welle (2) einer Strömungsmaschine, und mit einer Reinigungseinrichtung zur Reinigung von aus der Strömungsmaschine entnommenem Prozessgas (11), welches nach der Reinigung der oder jeder Trockengasdichtung (4) als gereinigtes Dichtungsgas (10) zuführbar ist, **dadurch gekennzeichnet, dass** die Reinigungseinrichtung (13) als in das rotorseitige Bauteil (2) der Strömungsmaschine integrierte Zentrifugaleinrichtung ausgeführt ist, wobei die Zentrifugaleinrichtung in die Welle (2) integriert ist und die Welle (2) mindestens eine radiale Eintrittsbohrung (22) für das Prozessgas (11) und je Trockengasdichtung (4) mindestens eine radiale Austrittsbohrung (23) für das Dichtungsgas (10) aufweist.

2. Trockengasdichtungssystem nach Anspruch 1, **dadurch gekennzeichnet, dass** die Welle (2) mindestens eine radiale Austrittsbohrung (24) für Verunreinigungen aufweist.

3. Trockengasdichtungssystem nach einem der Ansprüche 1 und 2, **gekennzeichnet durch** einen externen Speicher für Dichtungsgas (10).

4. Trockengasdichtungssystem nach einem der Ansprüche 1 bis 3 **gekennzeichnet durch** mindestens eine Heizbohrung in der Welle (2).

5. Strömungsmaschine, insbesondere Turbokompressor, mit einem Stator (3) und einem Rotor (2), und mit einem Trockengasdichtungssystem (1), **dadurch gekennzeichnet, dass** das Trockengasdichtungssystem (1) nach einem der Ansprüche 1 bis 4 ausgebildet ist.

## Claims

1. A dry gas sealing system (1) for a turbo machine, in particular for a turbo compressor, having at least one dry gas seal (4) for sealing a rotor-side component (2) against a stator-side component (3) of the the turbo machine, having a shaft (2)of a turbo machine, and having a cleaning device for cleaning process gas (11) removed from the turbo machine, which after the cleaning is suppliable to the or each dry gas seal (4) as cleaned sealing gas (10), **characterized in that** the cleaning device (13) is embodied as centrifugal device that is integrated in the rotor-side component (2) of the turbo machine, wherein the centrifugal device is integrated in the shaft (2) and the shaft (2) has at least one radial inlet bore (22) for the process gas (11) and for each dry gas seal (4) has at least one radial outlet bore (23) for the sealing gas (10).

2. The dry gas sealing system according to Claim 1, **characterized in that** the shaft (2) has at least one radial outlet bore (24) for contaminations.

3. The dry gas sealing system according to anyone of the Claims 1 and 2, **characterized by** an external storage for sealing gas (10).

4. The dry gas sealing system according to anyone of the Claim 1 to 3, **characterized by** at least one heating bore in the shaft (2).

5. A turbo machine, in particular turbo compressor, having a stator (3) and a rotor (2), and having a dry gas sealing system (1), **characterized in that** the dry gas sealing system (1) is formed according to any one of the Claims 1 to 4.

## Revendications

1. Système d'étanchéité à gaz sec (1) pour une turbomachine, notamment pour un turbocompresseur, comportant au moins un joint d'étanchéité à gaz sec (4) pour isoler de manière étanche un composant du côté du moteur (2) de la turbomachine par rapport à un composant du côté du stator (3) de la turbomachine, comportant un arbre (2) d'une turbomachine et comportant un dispositif de purification pour purifier le gaz de processus (11) prélevé dans la turbomachine, qui après la purification du ou de chaque joint d'étanchéité à gaz sec (4) peut être alimenté comme du gaz d'étanchéité purifié (10), **caractérisé en ce que** le dispositif de purification (13) est conçu comme un dispositif centrifuge intégré dans le composant du côté du rotor (2) de la turbomachine, dans lequel le dispositif centrifuge est intégré dans l'arbre (2) et l'arbre (2) présente au moins un orifice d'entrée radial (22) pour le gaz de processus (11) et par joint d'étanchéité à gaz sec (4) au moins un orifice de sortie radial (23) pour le gaz d'étanchéité (10).

2. Système d'étanchéité à gaz sec selon la revendication 1, **caractérisé en ce que** l'arbre (2) présente au moins un orifice de sortie radial (24) pour les impuretés.

3. Système d'étanchéité à gaz sec selon une des revendications 1 et 2, **caractérisé par** un accumulateur externe pour le gaz d'étanchéité (10).

4. Système d'étanchéité à gaz sec selon une des revendications 1 à 3, **caractérisé par** au moins un orifice de chauffage dans l'arbre (2).

5. Turbomachine, notamment turbocompresseur, comportant un stator (3) et un rotor (2), et comportant un système d'étanchéité à gaz sec (1), **caractérisé en ce que** le système d'étanchéité à gaz sec (1) est configuré conformément à une des revendications 1 à 4.
